# EUROPÄISCHE PATENTSCHRIFT

(11) **EP 3 657 939 B1**
(45) Veröffentlichungstag und Bekanntmachung des Hinweises auf die Patenterteilung: **23.06.2021**
(21) Anmeldenummer: 18793553.1
(22) Anmeldetag: 13.07.2018
(51) Int. Cl.: A01K 13/00

(54) **VORRICHTUNG FÜR DEN PFOTENSCHUTZ**
DEVICE FOR PROTECTING PAWS
DISPOSITIF POUR PROTÉGER LES PATTES

(30) Priorität: 25.07.2017 AT 506212017
(43) Veröffentlichungstag der Anmeldung: 03.06.2020
(73) Patentinhaber: Engelmayer, Brigitte, 4600 Wels (AT)
(72) Erfinder: VESZTERGOM, Franz, 4600 Wels (AT)
(74) Vertreter: Ellmeyer, Wolfgang
(86) Internationale Anmeldenummer: PCT/AT2018/000064
(87) Internationale Veröffentlichungsnummer: WO 2019/018864

(56) Entgegenhaltungen:
- WO-A2-2009/120723
- GB-A- 2 361 167
- US-A1- 2007 175 409
- US-A1- 2012 191 028
- US-A1- 2016 106 066
- US-S1- D 633 258

## Beschreibung

Die Erfindung bezieht sich auf eine Vorrichtung für den Pfotenschutz mit einem jeweils einen Schaftabschnitt und einen Pfotenabschnitt aufweisenden Ober- und Unterteil, die randseitig abschnittsweise unter Ausbildung eines Schaftes und einer an den Schaft anschließenden Pfotenaufhahme miteinander verbunden sind.

Zum Schutz der Pfoten von Tieren, insbesondere von Hunden, sind Schuhe bekannt (US 5495828 A), die aus einem Ober- und einem Unterteil bestehen, die an ihren Rändern unter Ausbildung einer Pfotenaufnahme miteinander vernäht sind. Um ein Abstreifen eines solchen Schuhs zu verhindern, ist mit einigem Abstand zur Öffnung der Pfotenaufhahme ein umlaufendes Verschlussband vorgesehen.

Vergleichbare Ausführungsformen gehen aus der US 2014360053 A, der US 2011041779 A oder der WO 09120723 A2 hervor, wobei alle bekannte Vorrichtungen zum Schutz der Pfoten von Tieren im Wesentlichen Schuhen bzw. Handschuhen für Menschen nachempfunden sind und somit den speziellen anatomischen Verhältnissen bei Tieren, insbesondere bei Hunden nur ungenügend Rechnung getragen werden kann. Vor allem bringen die bekannten Vorrichtungen den Nachteil mit sich, dass der sehr empfindliche Tastsinn an den Pfotenunterseiten im Zusammenspiel mit den anatomischen Besonderheiten von Zehengängern erheblich behindert wird.

Der Erfindung liegt somit die Aufgabe zugrunde, eine Vorrichtung der eingangs beschriebenen Art so auszugestalten, dass ein sicherer Pfotenschutz für Zehengänger, insbesondere für Hunde ermöglicht wird, ohne dabei den natürlichen Bewegungsablauf oder den Tastsinn an den Pfotenunterseiten wesentlich zu stören.

Die Erfindung löst die gestellte Aufgabe dadurch, dass der Pfotenabschnitt des Unterteils als entlang seiner Quersachse an den Schaftabschnitt des Unterteils anschließendes und der Pfotenabschnitt des Oberteils als entlang seiner Längsachse an den Schaftabschnitt des Oberteils anschließendes Halboval ausgebildet sind. Dies bedeutet, dass die beiden Längsachsen der Halbovale des Ober- und Unterteils genauso wie die beiden Querachsen der Halbovale des Ober- und Unterteils normal aufeinander stehen, sodass das Halboval des Unterteils stärker gekrümmt ist als das Halboval des Oberteils. Die Halbovale sind dabei vorzugsweise im Wesentlichen symmetrisch bezüglich Ihrer Längs- und Querachse ausgebildet. Zufolge dieser Maßnahmen verläuft im geschlossenen Zustand der erfindungsgemäßen Vorrichtung der Pfotenabschnitt des Unterteils gegenüber dem Schaftabschnitt des Unterteils in einem Winkel von ca. 25° bis 40°, wobei der Pfotenabschnitt des Unterteils zwischen dem Übergangsbereich zum Schaftabschnitt des Unterteils und der vorderen Begrenzung durch das Halboval konkav nach innen gewölbt ist und sich somit der Pfotenform zur Unterstützung des Tastsinnes anpasst. Eine besonders günstige Anpassung an die Pfotenform kann dadurch erreicht werden, dass die Querachsen der Halbovale des Unter- und des Oberteils in etwa gleich lang sind, während die Längsachsen der Halbovale des Unter- und des Oberteils in einem Verhältnis von 1,1 -1,25 stehen. Dabei ergibt sich ein Winkel zwischen dem Pfotenabschnitt des Unterteils und dem Schaftabschnitt des Unterteils von 30° bis 35°. Besonders einfache Konstruktionsbedingungen ergeben sich, wenn die Halbovale jeweils als Halbellipsen ausgebildet sind.

Um zu verhindern, dass es bei angelegtem Pfotenschutz zu einer falschen Laufbewegung bzw. gar zu einem Umknicken der Pfote in die falsche Richtung kommt, können erfindungsgemäß die beiden Halbovale symmetrisch zur Schaftachse ausgebildet sein und das entlang seiner Längsachse an den Schaftabschnitt des Oberteils anschließende Halboval an dem dem Schaftabschnitt abgewandten Ende seiner Querachse einen spitz zu einem Scheitelpunkt zulaufenden Endabschnitt aufweisen. Dementsprechend sollen erfindungsgemäß unter den Begriff "Halboval" auch solche Formen fallen, die einen spitz zu einem Scheitelpunkt zulaufenden Endabschnitt aufweisen, zumal physikalisch auch solche Endabschnitte mehrfach stetig differenzierbar sind. Folglich krümmt sich die Pfotenaufnahme in ihrem vorderen, dem Schafft abgewandten Endbereich etwas nach oben, sodass bei der Laufbewegung sichergestellt wird, dass stets der Unterteil auf dem Untergrund zur Auflage gelangt und es zu keinem Überrollen auf das Oberteil der Vorrichtung kommt.

Um das oben beschriebene Krümmungsverhalten der Pfotenaufnahme sicherzustellen, kann erfindungsgemäß der Schaftabschnitt des Oberteils eine Aussteifung aufweisen. Diese Aussteifung kann beispielsweise durch eine zumindest abschnittsweise Materialaufddoppelung oder auch durch den Einsatz unterschiedlicher Materialien mit höherer Biegesteifigkeit erfolgen.

Um in diesem Zusammenhang eine Faltenbildung zu vermeiden und gleichzeitig das Gesamtgewicht der Vorrichtung gering zu halten, wird vorgeschlagen, dass der Schaftabschnitt des Oberteils von einem Oval durchbrochen ist, das von einem Umfangseitig am Oberteil aufliegenden Abdeckteil als Aussteifung verschlossenen und im Bereich der Endabschnitte seiner Längs- und Querachse durch Aussparungen im Schaftabschnitt des Oberteils erweitert ist. Die Aussparungen im Endbereich der Längs- und Querachsen vermeiden dabei bei einer Krümmung Kraftspitzen im Material und verhindern somit eine Faltenbildung in diesen Bereichen, sodass einerseits keine Druckstellen auftreten und andererseits die Langlebigkeit des erfindungsgemäßen Pfotenschutzes verbessert wird.

In diesem Zusammenhang hat es sich als vorteilhaft erwiesen, wenn das Abdeckteil eine mit einer atmungsaktiven Membran abgedichtete Belüftungsöffnung aufweist. Die Belüftungsöffnung kann dabei aus einer einzelnen Aussparung oder aus mehreren kleineren Aussparungen bestehen. Eine Belüftung des Pfotenschutzes ist insofern dann wesentlich, wenn das verwendete Material nicht oder nur gering atmungsaktiv ist. Um in diesem Fall trotzdem das Eindringen von Wasser oder anderen Flüssigkeiten in die Vorrichtung für den Pfotenschutz zu vermeiden, kann die Membran beispielsweise Flüssigkeit dicht ausgebildet sein. Damit es auch im Falle einer Belüftungsöffnung zu keinem unbeabsichtigten Faltenwurf kommt, kann die Belüftungsöffnung in besonders vorteilhafter Ausgestaltung der Vorrichtung nicht eine große, sondern mehrere über das Abdeckteil verteilte kleinere Öffnungen umfassen, die das Biegeverhalten des eingesetzten Materials deutlich weniger beeinflussen.

Um eine erfindungsgemäße Vorrichtung für den Pfotenschutz in einfacher Weise an die Pfotengröße anpassen zu können, wird vorgeschlagen, dass im Bereich des offenen Schaftendes auf der Außenseite des Schaftes zwei das Oberteil mit dem Unterteil verbindende Spannverschlüsse angeordnet sind. Diese Spannverschlüsse können dabei beispielsweise als Klettverschlüsse ausgebildet sein. Beim Verschließen der Spannverschlüsse kann der seitliche Übergangsbereich zwischen Ober- und Unterteil zu einer Falte eingeschlagen werden, sodass das seitlich zu einer Falte eingeschlagene Material des Ober- und Unterteils als Feder wirkt, die eine größere Bewegungsfreiheit bei dennoch guter Passform ermöglicht. Die Aussteifung des Oberteils verhindert dabei, dass das seitlich zu einer Falte eingeschlagene Material des Ober- und Unterteils auch einen Faltenwurf im Bereich der Pfotenaufnahme bedingt. Um die Spannverschlüsse bei einer Abnützung gesondert von der übrigen erfindungsgemäßen Vorrichtung tauschen zu können, wird vorgeschlagen, dass die Spannverschlüsse je ein vollständig abziehbares Schlaufenband und mit dem Ober- bzw. Unterteil verklebte Hakenbänder umfassen.

Um neben einer guten Passform auch ein unbeabsichtigtes Abstreifen des Pfotenschutzes zu verhindern, kann der Schaftabschnitt des Unterteils über das offene Schaftende hinaus zu einem Abziehschutz verlängert sein, der sich in Schließstellung vom Schafft weg konusförmig verjüngt. Dieser Abziehschutz kann aus einem Basisteil bestehen, von dem zwei flügelförmige Schließteile abstehen, die unter Ausbildung eines sich vom Schaft weg verjüngenden Konus um die Pfote geschlossen werden können. Obwohl es auf die tatsächliche Flügelform nicht ankommt, ergeben sich besonders vorteilhafte Bedingungen, wenn die Schließteile in geschlossenem Zustand nach oben, also an der dem Schaft abgewandten Seite des Abziehschutzes mit dem Basisteil in einer Ebene abschließen, um ein Scheuem in diesem Bereich zu vermeiden. Die Schließteile können dabei in ihren Endbereichen mit einem Klettverschluss versehen sein, um die beiden Schließteile miteinander und in einer besonders bevorzugten Ausführungsform auch mit einem entsprechenden Anschlussteil des Schaftabschnittes des Oberteils verbunden zu werden, wobei der Anschlussteil zu diesem Zweck ebenfalls mit einem Klettverschluss ausgerüstet werden kann. Um auch in diesem Bereich eine Faltenbildung und Materialermüdung zu vermeiden, können auch die Randbereiche des Abziehschutzes im Ubergang zum Schaftabschnitt des Unterteils mit insbesondere kreisförmigen Aussparungen versehen sein. Je nach gewähltem Material für die erfindungsgemäße Vorrichtung besteht nämlich Gefahr, dass das Material an mechanisch besonders belasteten Endbereichen einreißt. Um dies zu verhindern, können solche Endbereiche entweder durch Ausstanzungen entlastet werden, sofern es sich um spitz zulaufende Randbereiche handelt oder durch eine Materialversteifung, beispielsweise durch aufgeklebte Abschlussbänder geschützt werden. Ein solcher Schutz ist auch dadurch möglich, dass einzelne Bestandteile der Vorrichtung, wie beispielsweise der Abstreifschutz nicht einstückig ausgebildet werden, sondern aus mehreren miteinander verklebten Einzelteilen bestehen, wodurch ein Einreißen des verwendeten Materials an den Klebestellen vermieden werden kann.

Damit die Wirkung des Abziehschutzes verbessert wird, kann dieser abschnittsweise auf der Innenseite mit einem rutschfesten Belag ausgerüstet sein, der gleichzeitig als Scheuerschutz fungiert

Bei der Materialwahl für den erfindungsgemäßen Pfotenschutz kommt es in erster Linie in ein ausgewogenes Verhältnis zwischen der Biegeelastizität beziehungsweise Biegesteifigkeit, der Elastizit̃ãt und der sich ergebenden Schutzwirkung an. Diese Parameter sind bei der Fertigung des Ober- und Unterteils aus einem Polurethanschaums sehr gut einstellbar. Darüber hinaus ist Polyurethan wasser- und säurebeständig und bietet in einem gewissen Umfang auch einen Stichschutz, sodass der erfindungsgemäße Pfotenschutz in vorteilhafter Weise mit Ausnahme der Befestigungsmittel vollständig aus einem Polyurethanschaum gefertigt sein kann. Besonders vorteilhafte Eigenschaften ergeben sich in diesem Zusammenhang bei einem Polyurethanschaum, der bei einer Materialstärke von 1 - 3 mm, insbesondere 2,5 mm eine Zugfestigkeit von etwa 8,1 N/mm², gemessen nach DIN 53 504 aufweist. Ein derartiger Polyurethanschaum kann für einen ausreichenden Verietzungsschutz eine Shore-Härte von 35 Sh/A, gemessen nach DIN 53505 besitzen.

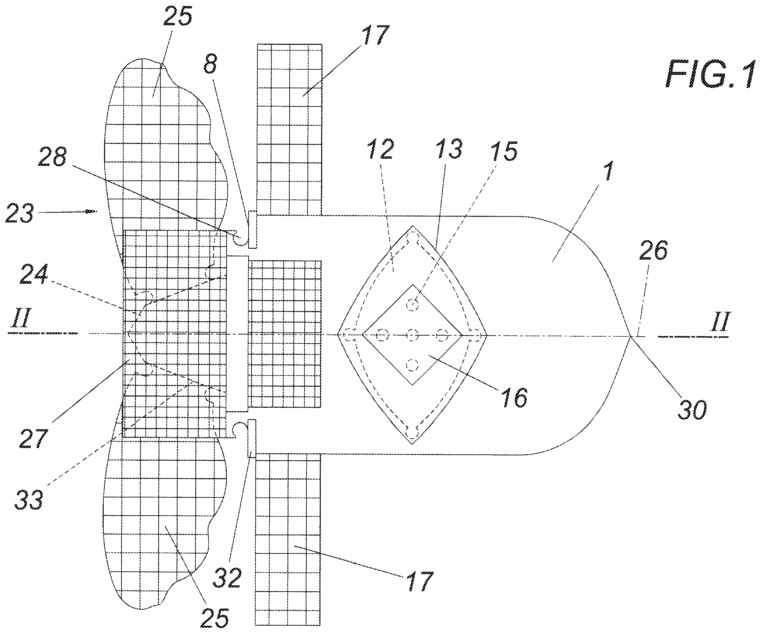

in der Zeichnung ist der Erfindungsgegenstand beispielsweise dargestellt. Es zeigen
- Fig. 1: eine Draufsicht auf eine erfindungsgemäße Vorrichtung in geöffnetem Zustand,
- Fig. 2: einen Schnitt entlang der Linie II-II der Fig. 1 in größerem Maßstab,
- Fig. 3: eine der Fig. 1 entsprechende Ansicht der Vorrichtung in geschlossenem Zustand,
- Fig. 4: einen Schnitt entlang der Linie IV-IV der Fig. 3, ebenfalls in größerem Maßstab und
- Fig. 5: eine schematische Ansicht der Zuschnittschablonen von Ober- und Teil zur besseren Erläuterung der geometrischen Verhältnisse.

Eine erfindungsgemäße Vorrichtung für den Pfotenschutz umfasst ein Oberteil 1 und ein Unterteil 2, die randseitig abschnittsweise miteinander verbunden sind. Sowohl das Oberteil 1 als auch das Unterteil 2 weisen je einen Schaftabschnitt 3, 4 und einen Pfotenabschnitt 5, 6 auf, wobei das Oberteil 1 und das Unterteil 2 randseitig so miteinander verbunden sind, dass sich ein Schaft 7 mit einem offenen Schaftende 8 und einer an der dem Schaftende 8 gegenüberliegenden Seite des Schaftes 7 anschließenden, abgeschlossenen Pfotenaufnahme 9 ergibt.

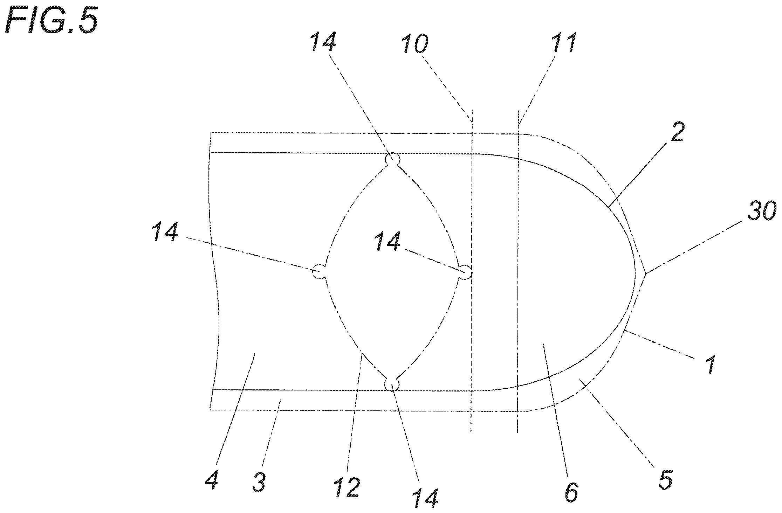

Erfindungsgemäß sind der Pfotenabschnitt 6 des Unterteils 2 und der Pfotenabschnitt 5 des Oberteils 1 jeweils als Halboval ausgebildet, das mit seiner Längs- beziehungsweise Querachse an den jeweiligen Schaftabschnitt 3, 4 des Ober- beziehungsweise Unterteils 1, 2 anschließt Der Pfotenabschnitt 6 des Unterteils 2 ist dabei als Halboval ausgebildet, das entlang seiner Querachse 10 an den Schaftabschnitt 4 des Unterteils 2 anschließt, während der Pfotenabschnitt 5 des Oberteils 1 als Halboval ausgebildet ist, das entlang seiner Längsachse 11 an den Schaftabschnitt 3 des Oberteils 1 anschließt. Die Längsachse 11 des Oberteils 1 und die Querachse des Unterteiles 2 sind dabei zueinander parallel, wie dies insbesondere der Fig. 5 im Detail entnommen werden kann.

Um zu verhindern, dass es bei angelegtem Pfotenschutz zu einer falschen Laufbewegung bzw. gar zu einem Umknicken oder Überrollen der Pfote in die falsche Richtung kommt, weist das entlang seiner Längsachse 11 an den Schaftabschnitt des Oberteils 1 anschließende Halboval an dem dem Schaftabschnitt 4 abgewandten Ende seiner Querachse einen spitz zu einem Scheitelpunkt zulaufenden Endabschnitt 30 auf. Folglich krümmt sich die Pfotenaufnahme in ihrem vorderen, dem Schaft 7 abgewandten Endbereich 30 etwas nach oben, sodass bei der Laufbewegung sichergestellt wird, dass stets der Unterteil 2 auf dem Untergrund zur Auflage gelangt und es zu keinem Überrollen auf das Oberteil 1 der Vorrichtung kommt

Der Schaftabschnitt 3 des Oberteils 1 ist in der dargestellten Ausführungsform von einem Oval 12 durchbrochen, dass von einem umfangseitig am Oberteil 1 aufliegenden Abdeckteil 13 als Aussteifung verschlossen ist. Um bei einer Krümmung des Ovalausschnittes, die sich beim erfindungsgemäßen Pfotenschutz zwangsläufig einstellt, eine Faltenbildung zu vermeiden, können die Endabschnitte der Längs- und Querachse des Ovals 12 durch Aussparungen 14 im Schaftabschnitt 3 des Oberteils 1 erweitert sein, in der in den Figuren dargestellten Ausführungsform weist der Abdeckteil 13 mehrere verteilte Belüftungsöffnungen 15 auf, die mit einer atmungsaktiven Membran 16 wasserdicht verschlossen ist. Das Vorsehen mehrerer Belüftungsöffnungen 15 sorgt dabei dafür, dass zu keinem unbeabsichtigten Faltenwurf kommt.

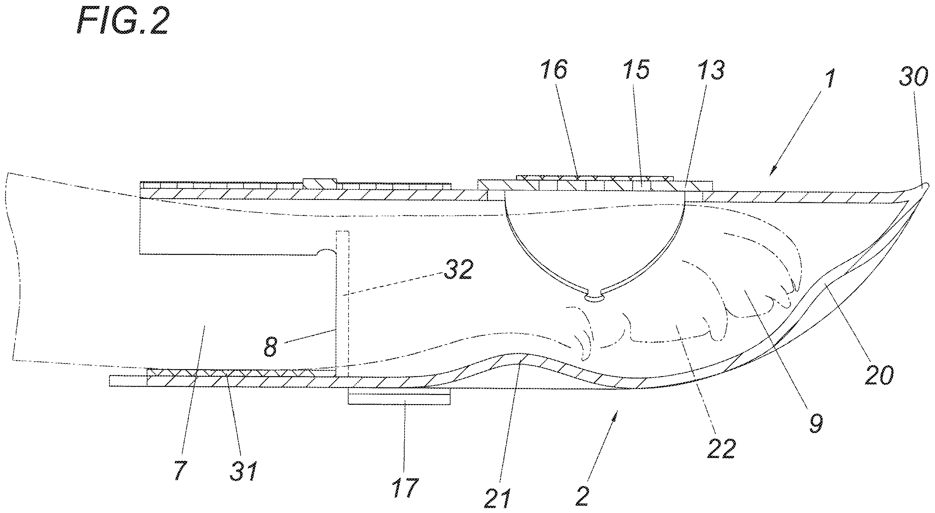

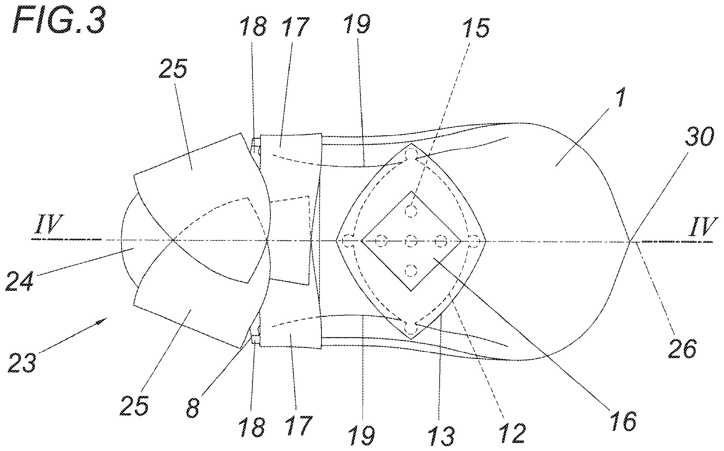

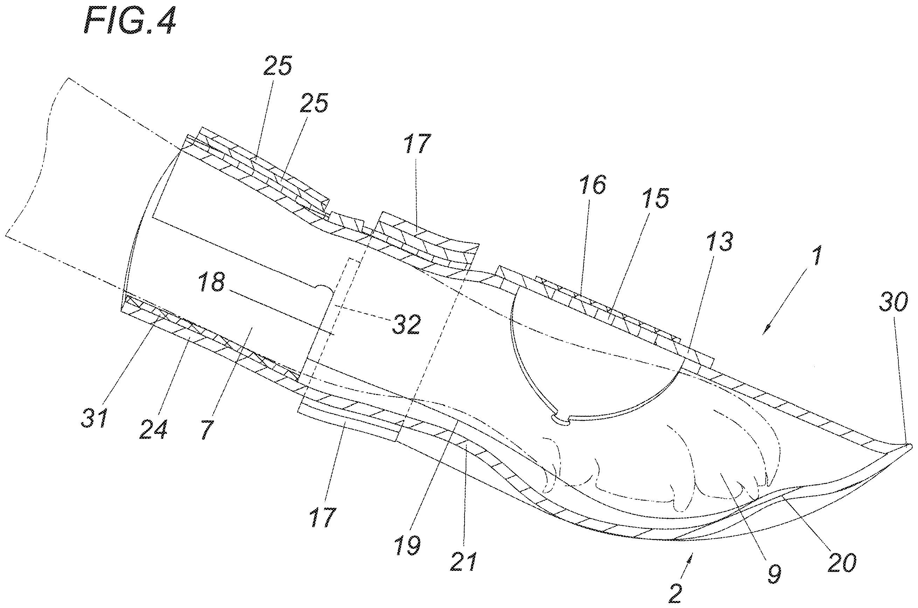

Um die erfindungsgemäße Vorrichtung an unterschiedliche Pfotengrößen anpassen zu können, sind im Bereich des offenen Schaftendes 8 zwei das Oberteil 1 mit dem Unterteil 2 verbindende Spannverschlüsse 17 vorgesehen, die in der dargestellten Ausführungsform als Klettverschlüsse ausgebildet sind. Beim Verschließen der Spannverschlüsse 17 wird, wie in der Fig. 3 dargestellt. Der seitliche Übergangsbereich zwischen Oberteil 1 und Unterteil 2 wird in geschlossenem Zustand gemäß den Fig. 3 und 4 zu einer Falte 18 eingeschlagen. Durch die Aussteifung des Oberteils 1 durch das Abdeckteil 13 ergeben sich durch das eingeschlagene Material des Oberteils 1 und des Unterteils 2 lediglich zwei Faltenwürfe 19 in unmittelbarem Anschluss an die Spannverschlüsse 17, sodass eine ungünstige Faltenbildung im Bereich der Pfotenaufnahme 9 vermieden wird. Im Bereich der Pfotenaufnahme 9 bildet lediglich der Pfotenabschnitt 6 des Unterteils 2 zwischen seiner vorderen Begrenzung durch das Halboval und der Querachse 10 als Übergangsbereich zum Schaftabschnitt 4 eine konkave Einwölbung 20. Im Schaftabschnitt 4 des Unterteils 2 ergibt sich eine weitere konkave Einwölbung 21 . Diese beiden Einwölbungen 20, 21 bedingen eine besonders gute Anpassung der erfindungsgemäßen Vorrichtung an die Anatomie einer Tierpfote 22, wie dies insbesondere den Figuren 2 und 4 näher entnommen werden kann. Um je nach verwendetem Material ein Einreißen an mechanisch besonders belasteten Randbereichen zu verhindern, können diese mit einer Materialversteifung, beispielsweise durch aufgeklebte Abschlussbänder 32 geschützt werden.

Um zu verhindern, dass sich der Pfotenschutz unbeabsichtigt löst oder durch äußere Einwirkung abgezogen werden kann, weist die dargestellte Ausführungsform einen Abziehschutz 23 auf, zu dem das offene Schaftende 8 des Unterteils 2 verlängert ist. Dieser Abziehschutz 23 umfasst ein Basisteil 24, an das zwei flügelförmige Schließteile 25 anschließen, die unter Ausbildung eines sich vom Schaft 7 wegverjüngenden Konus um die Tierpfote 22 geschlossen werden können, wie der Fig. 3 entnommen werden kann. Um die Konusbildung zu verbessern, können die beiden Schließteile 25 zur Schaftachse 26 geneigt an das Basisteil 24 anschließen. Die Schließteile 25 sind mit einem Klettverschluss versehen, um sie miteinander und mit einem entsprechenden Anschlussteil 27 des Oberteils 1, der zu diesem Zweck ebenfalls mit einem Klettverschluss ausgerüstet ist zu verbinden. Um die Wirkung des Abziehschutzes 23 zu verbessern kann dieser abschnittsweise auf der Innenseite mit einem rutschfesten Belag 31 ausgerüstet sein, der gleichzeitig als Scheuerschutz fungiert. Um ein Einreißen des Abziehschutzes 23 zu verhindern, sind wie oben beschreiben die flügelförmigen Schließteile 25 nicht einstückig mit dem Basisteil 24 verbunden, sondem an Klebestellen 32 an diesem angeklebt.

Um darüber hinaus auch im Bereich des Abziehschutzes eine Faltenbildung und Materialermüdung zu vermeiden, sind in der dargestellten Ausfuhrungsform die Randbereiche des Abziehschutzes 23 beziehungsweise dessen Basisteils 24 im Übergang zum Schaftabschnitt 4 des Unterteils 2 mit kreisförmigen Aussparungen 28 versehen.

## Patentansprüche

1. Vorrichtung für den Pfotenschutz mit einem jeweils einen Schaftabschnitt (3, 4) und einen Pfotenabschnitt (5, 6) aufweisenden Ober- und Unterteil (1, 2), die randseitig abschnittsweise unter Ausbildung eines Schaftes (7) und einer an den Schaft (7) anschließenden Pfotenaufnahme (9) miteinander verbunden sind, wobei der Pfotenabschnitt (6) des Unterteils (2) als entlang seiner Querachse (10) an den Schaftabschnitt (4) des Unterteils (2) anschließendes Halboval ausgebildet ist, **dadurch gekennzeichnet, dass** der Pfotenabschnitt (5) des Oberteils (1) als entlang seiner Längsachse (11) an den Schaftabschnitt (3) des Oberteils (1) anschließendes Halboval ausgebildet ist.

2. Vorrichtung nach Anspruch 1, **dadurch gekennzeichnet, dass** die beiden Halbovale symmetrisch zur Schaftachse (26) ausgebildet sind und das entlang seiner Längsachse (11) an den Schaftabschnitt (3) des Oberteils (1) anschließende Halboval an dem dem Schaftabschnitt (3) abgewandten Ende seiner Querachse einen spitz zu einem Scheitelpunkt zulaufenden Endabschnitt aufweist.

3. Vorrichtung nach Anspruch 1 oder 2, **dadurch gekennzeichnet, dass** der Schaftabschnitt (3) des Oberteils (1) eine Aussteifung aufweist.

4. Vorrichtung nach Anspruch 3, **dadurch gekennzeichnet, dass** der Schaftabschnitt (3) des Oberteils (1) von einem Oval (12) durchbrochen ist, das von einem umfangseitig am Oberteil (1) aufliegenden Abdeckteil (13) als Aussteifung verschlossenen und im Bereich der Endabschnitte seiner Längs- und Querachse durch Aussparungen (14) im Schaftabschnitt (3) des Oberteils (1) erweitert ist.

5. Vorrichtung nach Anspruch 4, **dadurch gekennzeichnet, dass** das Abdeckteil (13) eine mit einer atmungsaktiven Membran (16) abgedichtete Belüftungsöffnung (15) aufweist.

6. Vorrichtung nach einem der Ansprüche 1 bis 5, **dadurch gekennzeichnet, dass** im Bereich des offenen Schaftendes (8) auf der Außenseite des Schaftes (7) zwei das Oberteil (1) mit dem Unterteil (2) verbindende Spannverschlüsse (17) angeordnet sind.

7. Vorrichtung nach einem der Ansprüche 1 bis 6, **dadurch gekennzeichnet, dass** der Schaftabschnitt (4) des Unterteils (2) über das offene Schaftende (8) hinaus zu einem Abziehschutz (23) verlängert ist, der sich in Schließstellung vom Schaft (7) weg konusförmig verjüngt.

8. Vorrichtung nach Anspruch 7, **dadurch gekennzeichnet, dass** der Abziehschutz (23) abschnittsweise auf der Innenseite mit einem rutschfesten Belag ausgerüstet ist.

9. Vorrichtung nach einem der Ansprüche 1 bis 8, **dadurch gekennzeichnet, dass** Ober- und Unterteil (1, 2) aus einem Polyurethanschaum gefertigt sind.

10. Vorrichtung nach Anspruch 9, **dadurch gekennzeichnet, dass** der Polyurethanschaum eine Materialstärke von 1-3 mm und eine Zugfestigkeit von etwa 8,1 N/mm² aufweist.

## Claims

1. A device for protecting paws, comprising an upper part and a lower part (1, 2), each having a shank portion (3, 4) and a paw portion (5, 6), the upper and lower parts (1, 2) being connected in sections at the edges, forming a shank (7) and a paw holder (9) adjacent to the shank (7), the paw portion (6) of the lower part (2) is in semi-oval shape adjoining, along its transversal axis (10), the shank portion (4) of the lower part (2), **characterised in that**
the paw portion (5) of the upper part (1) is in semi-oval shape adjoining, along its longitudinal axis (11), the shank portion (3) of the upper part (1).

2. The device according to claim 1, **characterised in that**:
both semi-ovals are arranged symmetrically with respect to the shank axis (26), and **in that** the semi-oval adjoining, along its longitudinal axis (11), the shank portion (3) of the upper part (1) has, at the end of its transversal axis facing away from the shank portion (3), an end portion tapered to form an apex.

3. The device according to claim 1 or claim 2, **characterised in that** the shank portion (3) of the upper part (1) has a reinforcement.

4. The device according to claim 3, **characterised in that** the shank portion (3) of the upper part (1) is penetrated by an oval (12) which is closed off by a cover part (13) circumferentially resting on the upper part (1) as reinforcement and which is complemented by cut-outs (14) in the shank portion (3) of the upper part (1), in the area of the end portions of the longitudinal and transversal axes thereof.

5. The device according to claim 4, **characterised in that** the cover part (13) has a vent opening (15) sealed with a breathable membrane (16).

6. The device according to any one of the claims 1 to 5, **characterised in that** two tension fasteners (17) connecting the upper part (1) to the lower part (2) are located in the area of the open shank end (8) on the outside of the shank (7).

7. The device according to any one of the claims 1 to 6, **characterised in that** the shank portion (4) of the lower part (2) is extended beyond the open shank end (8) toward a slip-off protection (23) which in the closed position is tapered conically in a direction away from the shank (7).

8. The device according to claim 7, **characterised in that** the slip-off protection (23) is equipped with a non-slip coating in sections on its inside.

9. The device according to one of the claims 1 to 8, **characterised in that** the upper and lower parts (1, 2) are made of polyurethane foam.

10. The device according to claim 9, **characterised in that** the polyurethane foam has a material thickness of 1 to 3 mm and a tensile strength of about 8.1 N/mm².

## Revendications

1. Dispositif pour protéger les pattes, comprenant une partie supérieure et une partie inférieure (1, 2), chacune ayant une portion de tige (3, 4) et une portion de patte (5, 6), la parties supérieure (1) et la partie inférieure (2) étant reliées en sections au niveau des bords, formant une tige (7) et un support de patte (9) adjacent à la tige (7), dans lequel
la portion de patte (6) de la partie inférieure (2) est formée en une forme semi-ovale qui, le long de son axe transversal (10), est reliée à la portion de tige (4) de la partie inférieure (2), **caractérisé en ce que**
la portion de patte (5) de la partie supérieure (1) est formée en une forme semi-ovale qui, le long de son axe longitudinal (11), est reliée à la portion de tige (3) de la partie supérieure (1).

2. Dispositif selon la revendication 1, **caractérisé en ce que**
les deux semi-ovales sont disposées symétriquement par rapport à l'axe de la tige (26), et **en ce que** le semi-ovale qui, le long de son axe longitudinal (11), est relié à la portion de tige (3) de la partie supérieure (1) présente, à l'extrémité de son axe transversal opposée à la portion de tige (3), une partie d'extrémité effilée pour former un sommet.

3. Dispositif selon la revendication 1 ou la revendication 2, **caractérisé en ce que** la portion de tige (3) de la partie supérieure (1) présente un renfort.

4. Dispositif selon la revendication 3, **caractérisé en ce que** la portion de tige (3) de la partie supérieure (1) est traversée par un ovale (12) qui est fermé par une partie de recouvrement (13) reposant circonférentiellement sur la partie supérieure (1) en tant que renfort et qui est complété par des découpes (14) dans la portion de tige (3) de la partie supérieure (1) dans la zone des portions d'extrémité de son axe longitudinal et de son axe transversal.

5. Dispositif selon la revendication 4, **caractérisé en ce que** la partie de couverture (13) comporte une ouverture d'aération (15) fermée par une membrane respirante (16).

6. Dispositif selon l'une quelconque des revendications 1 à 5, **caractérisé en ce que** deux attaches de tension (17) reliant la partie supérieure (1) à la partie inférieure (2) sont situées dans la zone de l'extrémité ouverte de la tige (8) sur l'extérieur de la tige (7).

7. Dispositif selon l'une quelconque des revendications 1 à 6, **caractérisé en ce que** la portion de tige (4) de la partie inférieure (2) s'étend au-delà de l'extrémité ouverte de la tige (8) vers une protection contre l'enlèvement (23) qui, en position fermée, se rétrécit de manière conique en s'éloignant de la tige (7).

8. Dispositif selon la revendication 7, **caractérisé en ce que** la protection contre l'enlèvement (23) est équipée d'un revêtement antidérapant par sections sur sa face intérieure.

9. Dispositif selon l'une des revendications 1 à 8, **caractérisé en ce que** la partie supérieure et la partie inférieure (1, 2) sont fabriquées d'une mousse de polyuréthane,

10. Dispositif selon la revendication 9, **caractérisé en ce que** la mousse de polyuréthane présente une épaisseur de matériau de 1 à 3 mm et une résistance à la traction d'environ 8,1 N/mm².
